# EUROPEAN PATENT APPLICATION

(11) **EP 2 869 377 A1**
(43) Date of publication of application: **06.05.2015**
(21) Application number: 13290261.0
(22) Date of filing: 29.10.2013
(51) Int. Cl.: H01M 8/04, C25B 1/04, H01M 8/06, H01M 16/00, H01M 8/18, H01M 8/12

(54) **Power generation system**

(71) Applicant: TOTAL MARKETING SERVICES, 92800 Puteaux (FR)
(72) Inventor: Curien, Jean-Baptiste, 88340 Le Val d'Ajol (FR); Kressmann, Stéphane, 69360 Communay (FR)
(74) Representative: Croonenbroek, Thomas Jakob

(57) **Abstract**

The Invention relates to a power generation system comprising:
- at least one renewable energy source (5),
- a reversible fuel cell module (9) exhibiting a electrolysis functioning mode where the fuel cell module (9) is powered by the renewable energy source (5) for generation of a combustible gas and a fuel cell functioning mode where the fuel cell module (9) generates electricity from a combustible gas,
- a high temperature heat storage (19) coupled to said reversible fuel cell module (9) for maintaining the reversible fuel cell module (9) in a operation temperature range in the electrolysis functioning mode,
- a combustible gas storage (17) coupled to the reversible fuel cell module (9) for storing the combustible gas generated by the reversible fuel cell module (9) in the electrolysis functioning mode and for supplying the combustible gas to the reversible fuel cell module (9) in the fuel cell function mode.

## Description

### FIELD OF THE INVENTION

The invention relates to a power generation system in particular for enhancing power harvesting from renewable energy sources.

### BACKGROUND AND PRIOR ART

Renewable energy sources like solar panels or other intermittent renewable sources are now widely used for generation of electricity. In general, the power generated by these energy sources is not used directly by the user who has installed these renewable energy sources, but is supplied to the public grid. This solves directly the problem that once the electric power is generated, it must be consumed instantly.

However, intermittency of renewable energy sources is a great challenge not only for isolated sites, but also for grid operators where high variations in energy generation can cause problems on the public grid management.

For instance, isolated sites, which arc not connected to a public grid, the electrical energy harvested in excess is in general stored in a battery in order to have electrical energy at disposal when the renewable energy source docs not work, for example in the night for solar panels or when wind is not blowing for wind mills.

The problem however is that the energy that may be stored is quite limited unless one uses very big and heavy batteries which are quite expensive.

In addition, when dimensioning a power generating system for an isolated site located on a place on earth with pronounced seasons, batteries exhibit quite difficulties to store electrical energy over a long time and there are also problems for having cost-effective batteries.

For these long term cycles, it has been proposed to convert electrical energy in excess into another energy source, in particular to convert electrical energy via electrolysis into hydrogen and to store the hydrogen for periods where the renewable power sources arc less available. When necessary, the hydrogen is reconverted into electricity through a fuel cell.

Such a system is for example discussed in the article "PEM electrolysis for production of hydrogen from renewable energy sources", Frano Barbir, Solar Energy 78 (2005) 661-669.

However, at every power conversion, one has to face conversion losses that may put at question the overall system.

The present invention focusses on improving the overall energy outcome for a system as described above.

For this purpose, the invention proposes a power generation system comprising:
- at least one renewable energy source,
- a reversible fuel cell module exhibiting a electrolysis functioning mode where the fuel cell module is powered by the renewable energy source for generation of a combustible gas and a fuel cell functioning mode where the fuel cell module generates electricity from a combustible gas,
- a high temperature heat storage coupled to said reversible fuel cell module for maintaining the reversible fuel cell module in a operation temperature range in the electrolysis functioning mode,
- a combustible gas storage coupled to the reversible fuel cell module for storing the combustible gas generated by the reversible fuel cell module in the electrolysis functioning mode and for supplying the combustible gas to the reversible fuel cell module in the fuel cell function mode.

According to one aspect said reversible fuel cell module comprises a reversible fuel cell, in particular a reversible solid oxide fuel cell SOFC.

According to another aspect, reversible fuel cell module comprises at least a first fuel cell generating a combustible gas and a second fuel cell generating electricity from a combustible gas.

The high temperature heat storage may comprise a heat exchanger having salts as heat exchange medium that arc in a molten state in the operation temperature range of the reversible fuel cell module.

Furthermore, the reversible fuel cell module can be encapsulated by the high temperature heat storage.

According to a further development, there is foreseen a secondary heat exchanger coupled on the one side to the high temperature heat storage and on the other side to at least one domestic heat consumer module.

The domestic heat consumer module comprises for example the hot water circuit or hot water storage capacities of a building.

According to a further aspect, the power generation system comprises a temperature sensor and a coupling actuator between the high temperature heat storage and the secondary heat exchanger which is activated upon a signal from the temperature sensor in order to activate the secondary heat exchanger at a predetermined temperature within or above the operation temperature range of the reversible fuel cell module.

The renewable energy source may comprise a photovoltaic panel.

According to another aspect, the power generation system comprises for example a battery for storing electricity produced by the renewable energy source and a switching module for powering the reversible fuel cell module in the electrolysis functioning mode once a predefined load level of the battery has been reached.

In order to extend autonomy, the reversible fuel cell module may in addition be coupled to a natural gas distribution supply.

The invention also relates to a Building comprising a power generation system as described above, where the secondary heat exchanger is coupled to a heating system of the building.

### BRIEF DESCRIPTIONS OF THE DRAWINGS

Other advantages and characteristics will appear with the reading of the description of the following figures, among which:
- FIG. 1 is a schematic functional representation of an embodiment of a power generation system according to the invention,
- FIG. 2 is a more detailed and structural schematic of the embodiment of the power generation system of figure 1.
- FIG. 3 is a more detailed and structural schematic of a variant of the embodiment of the power generation system of figure 2.

### DETAILED DESCRIPTION

On all the figures the same references refer to the same elements.

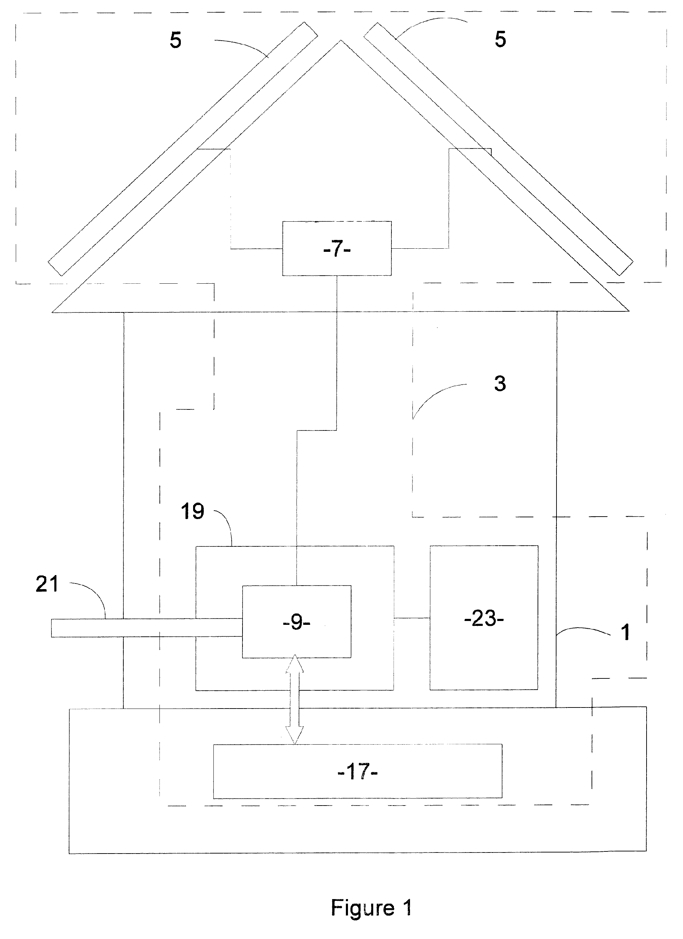

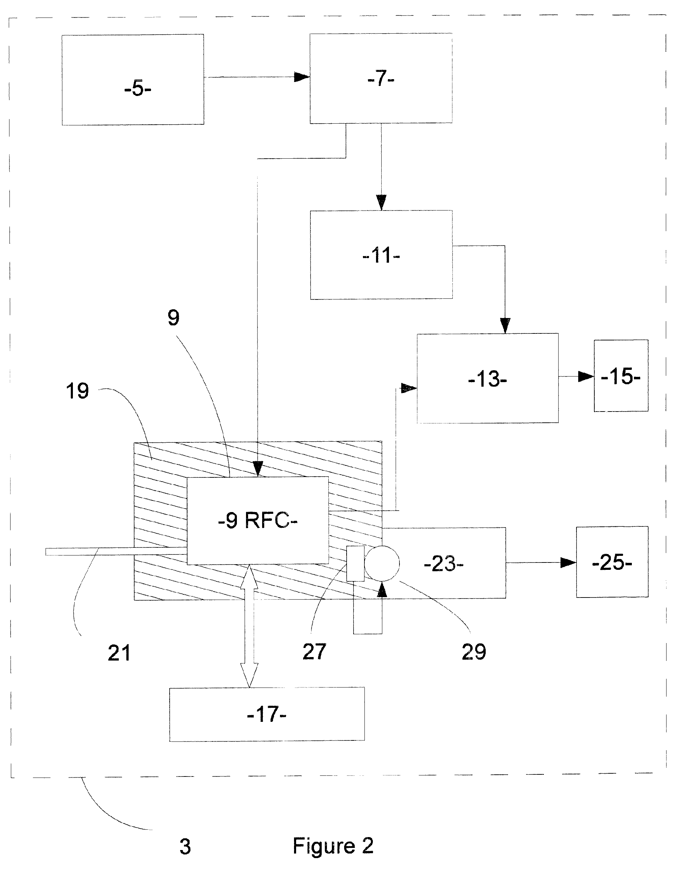

An embodiment of the present invention will be described in relationship with figures 1 and 2.

In figure 1, there is represented a building 1, like a house, building, quarter, farmer which is equipped with a power generation system 3.

The power generation system 3 comprises at least one renewable energy source 5 like solar panels (as represented on figure 1) or electricity generating wind mills (also designated as wind turbine) or any other intermittent renewable energy source.

The renewable energy source 5 is connected to a power converter and switching module 7 like a DC/DC converter or like in order to adapt the electrical energy generated by the renewable energy source 5 to the downstream connected units.

In particular, the power converter and switching module 7 is connected to a reversible fuel cell module 9 on the one hand and optionally (as shown in figure 2) to a battery 11. As shown in figure 2, the battery 11 is coupled to an optional converter 13, for example a DC/AC converter that is coupled to a consumer circuit 15 of the building 1 or to a public grid for export of electricity.

The reversible fuel cell module 9 is a module exhibiting on the one hand a electrolysis functioning mode where the module is powered by the electricity supplied by the renewable energy source for generation of a combustible gas, like for example hydrogen and on the other hand a fuel cell functioning mode where the module generates electricity from a combustible gas like hydrogen.

The reversible fuel cell module 9 may be for example in one embodiment a single reversible solid oxide fuel cell (SOFC) 9RFC, that operates at a high temperature between 500°C and 1000°C in both functioning modes.

The reversible fuel cell module 9 is also coupled to a combustible gas storage 17, like a hydrogen storage, for storing the combustible gas generated by the reversible fuel cell module 9 in the electrolysis functioning mode and for supplying the combustible gas to the reversible fuel cell module in the fuel cell function mode. In addition, the oxygen produced by electrolysis may also be captured and stored in a separate non-represented storage, for example for re-use during combustion or for separate selling.

Furthermore, the reversible fuel cell module 9 is coupled to a water tank (not represented) in order to supply water for electrolysis and generation of hydrogen in the electrolysis functioning mode.

As shown in figure 2, when functioning in the fuel cell functioning mode where the fuel cell 9 generates electricity, the reversible fuel cell module 9 is also connected to the converter 13, which is coupled to the consumer circuit 15 of the building 1.

In order to better valuate the heat, in particular generated when the reversible fuel cell module 9 is functioning in the fuel cell functioning mode, the power generation system 3 furthermore comprises a high temperature heat storage 19 coupled to said reversible fuel cell module for maintaining the reversible fuel cell module 9 in an operation temperature range in particular in the electrolysis functioning mode.

This is in particular very useful when switching from the fuel cell functioning mode to the electrolysis functioning mode, because the heat generated during the fuel cell functioning mode can be re-used during the electrolysis mode. Thus no or less additional heating is necessary in order to maintain the reversible fuel cell module 9 in an operation temperature range.

As an example, the high temperature heat storage 19 comprises a heat exchanger having salts as heat exchange medium that are in a molten state in the operation temperature range of the reversible fuel cell module 9.

One may use Fluorides (LiF), Chlorides (NaCl), Fluoroborates (NaBF4), or mixtures like LiF-BcF2, or LiF-NaF-KF, KCl-MgCl2.

Molten salts have the advantage to be thermodynamically very efficient and to be in a molten state in a wide temperature range.

In order to enhance such a high temperature heat storage, the reversible fuel cell module 9 is encapsulated by the high temperature heat storage.

It is also shown in figures 1 and 2, that the reversible fuel cell module 9 is coupled to a natural gas distribution supply 21. The natural gas may be used to extend autonomy and to heat for example the reversible fuel cell module 9 if its temperature is going to be below its operation temperature range.

For further valuating the generated heat, the power generation system further comprises a secondary heat exchanger 23 coupled on the one side to the high temperature heat storage 19 and on the other side to at least one domestic heat consumer module 25, like a hot water circuit of the building 1 for example through a hot water storage tank. By hot water circuit, it is meant the hot water supply for example for taking a shower but also the hot water for the heating system (floor, radiator, etc.) for heating the rooms of the building 1.

One may therefore understand that the present power generation system exhibits a double level heat valuation, the first level being at high temperature in order to enhance the efficiency of the reversible fuel cell module 9 and a second level for heating the building or to supply hot water in the water supply circuit of the building 1.

Optionally as shown in figure 2, the power generation system 3 comprises furthermore a temperature sensor 27 and a coupling actuator 29 (like a pump or a valve) between the high temperature heat storage 21 and the secondary heat exchanger 23.

The coupling actuator 29 is activated upon a signal from the temperature sensor 27 in order to activate the secondary heat exchanger 23 at a predetermined temperature within or above the operation temperature range of the a reversible fuel cell module 9.

Thus the secondary heat level valuation is only activated if there is heat in excess generated by the reversible fuel cell module 9.

The functioning of the power generating system according to the invention may be as follows:
Let's assume a sunny day in the afternoon when the habitants of the building 1 are still at work or in school and therefore, there are very few consumers connected to the consumer circuit 15.

In this case, the PV panels deliver quite a lot of electrical power. This power may be then stored first in the battery 11 if such a battery is present in the system.

When a predefined load level of the battery 11 has been reached, the power converter and switching module 7 switches for powering the reversible fuel cell module 9 in the electrolysis functioning for producing hydrogen and storing it in the hydrogen storage 17.

Let's assume that the molten salt in the high temperature heat storage is still about 700° C, the reversible fuel cell module 9 can directly start functioning without need of an additional heating.

In case the temperature is too low for functioning, the reversible fuel cell module 9 can be heated either with the gas in the combustible gas storage 17 or through the supply of natural gas from the natural gas distribution supply 21.

In the evening, when the sun is down, the reversible fuel cell module 9 is switched in the fuel cell functioning mode for supplying electricity to the converter 13, which is coupled to the consumer circuit 15 of the building 1.

In this case, heat generated by the reversible fuel cell module 9 is stored in the high temperature heat storage 19. In case the temperature of the molten salt in the high temperature heat storage reaches for example 750°C measured by the temperature sensor 27, the actuator 29 opens and activates the secondary heat exchanger 23 for heating the building or to supply hot water.

It can be easily understood that the present power generation system does only need one unit for generating electricity or hydrogen together with heat.

In addition, the heat generated in the system is stored and used when necessary, on the fuel cell level or for heating the building.

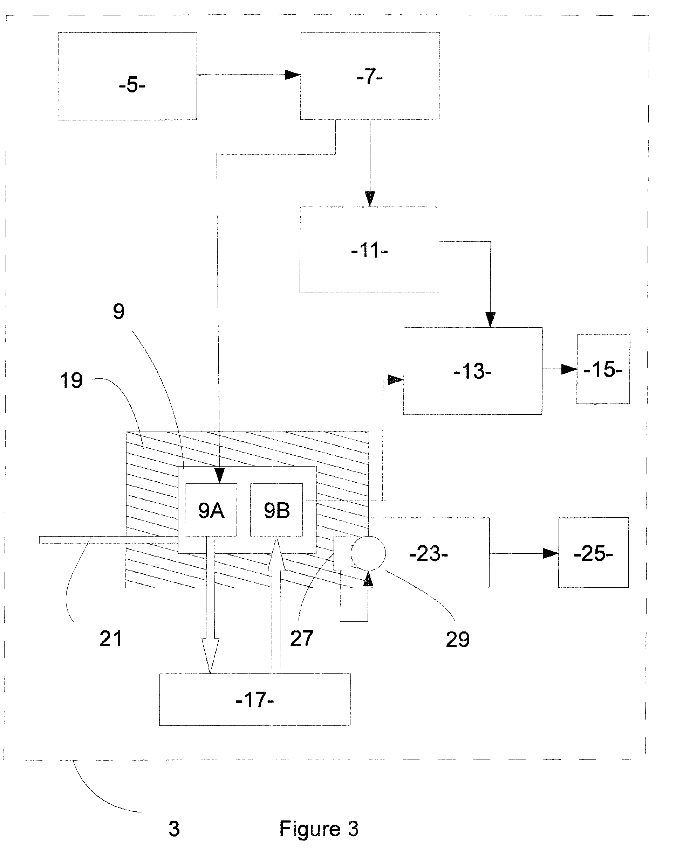

FIG. 3 is a more detailed and structural schematic of a variant of the embodiment of the power generation system of figure 2.

This variant differs from that of figure 2 by the fact that the reversible fuel cell mode 9 is composed of at least two distinct fuel cells 9A and 9B having respectively separate functions and a common heat storage 19. One fuel cell module 9A is only functioning in the electrolysis functioning mode and supplied by the renewable energy source 3 for generation of a combustible gas and for storing this gas in the combustible gas storage 17. The other fuel cell 9B is only functioning in the fuel cell functioning mode for generating electricity and supplied from the combustible heat storage 17 with combustible gas to produce heat and electricity at a different time of operation, during the night and/or off-period of renewable electricity availability.

Fuel cell 9B could be used to pre-heat the other one 9A through the heat storage 19. One fuel cell 9A is a SOEC (solid oxide electrolysis cell), the other fuel cell 9B is a SOFC (solid oxide fuel cell) or a PEM fuel cell (polymer electrolyte membrane fuel cell).

It can easily be understood the overall energy efficiency of the present power generation system is quite high.

## Claims

1. Power generation system comprising:
- at least one renewable energy source (5),
- a reversible fuel cell module (9) exhibiting a electrolysis functioning mode where the fuel cell module (9) is powered by the renewable energy source (5) for generation of a combustible gas and a fuel cell functioning mode where the fuel cell module (9) generates electricity from a combustible gas,
- a high temperature heat storage (19) coupled to said reversible fuel cell module (9) for maintaining the reversible fuel cell module (9) in a operation temperature range in the electrolysis functioning mode,
- a combustible gas storage (17) coupled to the reversible fuel cell module (9) for storing the combustible gas generated by the reversible fuel cell module (9) in the electrolysis functioning mode and for supplying the combustible gas to the reversible fuel cell module (9) in the fuel cell function mode.

2. Power generation system as to claim 1, where said reversible fuel cell module (9) comprises a reversible fuel cell (9RFC).

3. Power generation system as to claim 2, where said reversible fuel cell (9RFC) is a reversible solid oxide fuel cell SOFC.

4. Power generation system as to claim 1, where said reversible fuel cell module (9) comprises at least a first fuel cell (9A) generating a combustible gas and a second fuel cell (9R) generating electricity from a combustible gas.

5. Power generation system as to any of claims 1 to 4, where the high temperature heat storage (19) comprises a heat exchanger having salts as heat exchange medium that are in a molten state in the operation temperature range of the reversible fuel cell module (9).

6. Power generation system as to any of claims 1 to 5, where the reversible fuel cell module (9) is encapsulated by the high temperature heat storage (19).

7. Power generation system as to any of claims 1 to 6, further comprising a secondary heat exchanger (23) coupled on the one side to the high temperature heat storage (19) and on the other side to at least one domestic heat consumer module (25).

8. Power generating system as to claim 7, where domestic heat consumer module (25) comprises the hot water circuit or hot water storage capacities of a building (1).

9. Power generation system as to claim 7 or 8, comprising furthermore a temperature sensor (27) and a coupling actuator (29) between the high temperature heat storage (19) and the secondary heat exchanger (23) which is activated upon a signal from the temperature sensor (27) in order to activate the secondary heat exchanger (23) at a predetermined temperature within or above the operation temperature range of the reversible fuel cell module (9).

10. Power generation system as to any of claims 1 to 9, where the renewable energy source (5) comprises a photovoltaic panel.

11. Power generation system as to any of claims 1 to 10, comprising furthermore a battery (11) for storing electricity produced by the renewable energy source (5) and a switching module (7) for powering the reversible fuel cell module (9) in the electrolysis functioning mode once a predefined load level of the battery (11) has been reached.

12. Power generation system as to any of claims 1 to 11, where the reversible fuel cell module (9) is in addition coupled to a natural gas distribution supply (21).

13. Building (1) comprising a power generation system as to any of claims 1 to 12, where the secondary heat exchanger (23) is coupled to a heating system of the building (1).
